# NEUE EUROPÄISCHE PATENTSCHRIFT

(11) **EP 2 758 291 B2**
(45) Veröffentlichungstag und Bekanntmachung des Hinweises auf die Entscheidung über den Einspruch: **21.12.2022**
(45) Hinweis auf die Patenterteilung: 15.11.2017
(21) Anmeldenummer: 12762277.7
(22) Anmeldetag: 20.09.2012
(51) Int. Cl.: B60T 7/22, B60W 30/08

(54) **FAHRERASSISTENZSYSTEM MIT AUTONOMER BREMSUNG BIS ZUM STILLSTAND**
DRIVER ASSISTANCE SYSTEM HAVING AUTONOMOUS BRAKING TO A STANDSTILL
SYSTÈME D'AIDE À LA CONDUITE AVEC FREINAGE AUTONOME JUSQU'À L'ARRÊT

(30) Priorität: 22.09.2011 DE 102011114072
(43) Veröffentlichungstag der Anmeldung: 30.07.2014
(73) Patentinhaber: KNORR-BREMSE Systeme für Nutzfahrzeuge GmbH, 80809 München (DE)
(72) Erfinder: ROSSI, Mark, 71691 Freiburg a.N. (DE); HACKL, Thomas, 71679 Asperg (DE); BANSPACH, Jochen, 74921 Helmstadt-Bargen (DE); GÜCKER, Ulrich, 71701 Schwieberdingen (DE); KLEIN, Markus, 75181 Pforzheim (DE)
(74) Vertreter: Wiedemann, Markus
(86) Internationale Anmeldenummer: PCT/EP2012/068497
(87) Internationale Veröffentlichungsnummer: WO 2013/041600

(56) Entgegenhaltungen:
- EP-A1- 2 077 212
- DE-A1- 19 925 643
- DE-A1-102004 055 399
- DE-A1-102004 058 663
- DE-A1-102007 050 221
- DE-A1-102009 002 375
- US-A1- 2010 023 226

## Beschreibung

Die Erfindung betrifft ein Fahrerassistenzsystem für ein Fahrzeug mit einer Detektionseinrichtung, gemäß dem Oberbegriff von Anspruch 1.

Eine Fahrerassistenzsystem bzw. ein Verfahren zum Abbremsen eines Fahrzeugs ist aus der EP 2 214 940 B1 bekannt. Bei dem bekannten Fahrerassistenzsystem wird unabhängig vom Fahrer eine autonome Notbremsung eines Fahrzeugs mit maximal zur Verfügung stehender Bremskraft mittels der Betriebsbremse ausgelöst, wenn dies die Umstände erfordern. Wenn das Fahrzeug dann aufgrund der Notbremsung zum Stillstand gekommen ist, wird mittels einer Vorderfahrzeug-Detektionseinrichtung untersucht, ob sich ein Vorder-Fahrzeug vor dem betreffenden, in den Stillstand eingebremsten Fahrzeug befindet. Falls die der Fall ist, wird eine Feststellbremse des Fahrzeugs zugespannt. Damit soll verhindert werden, dass das ein durch eine Notbremsung eingebremstes Fahrzeug durch ein von hinten auffahrendes Fahrzeug auf das Vorder-Fahrzeug aufgeschoben wird. Dies setzt allerdings voraus, dass die Vorderfahrzeug-Detektionseinrichtung nicht bei einem Aufprall auf das Vorder-Fahrzeug beschädigt wurde, was allerdings für den Fall, dass es zu einer Kollision mit dem Vorder-Fahrzeug trotz der eingeleiteten Notbremsung nicht ausgeschlossen werden kann.

Weiterhin sind aus dem Stand der Technik Fahrerassistenzsysteme wie ACC (Adaptive Cruise Control) bekannt, welche mit Hilfe einer entsprechenden Detektionseinrichtung den Abstand zu einem vorausfahrenden Fahrzeug messen und an eine Steuerung melden, welche dann den Ist-Abstand zum vorausfahrenden Fahrzeug auf einen geschwindigkeitsabhängigen Soll-Abstand durch Eingriff in eine Motorsteuerung und/oder in eine Bremseinrichtung einregelt. Diese Regelung ist bei den bekannten ACC-Systemen allerdings nur solange wirksam, solange die Detektionseinrichtung, z.B. ein Abstandssensor funktioniert. In den Fällen, in welchen der Geschwindigkeitsunterschied zum vorausfahrenden Fahrzeug allerdings so groß bzw. der Abstand zu diesem so klein ist, dass mit hoher Wahrscheinlichkeit mit einem Aufprall gerechnet werden muss, ist allerdings mit einer Beschädigung des Abstandssensors zu rechnen, weil dieser in der Regel ganz vorne am Fahrzeug angeordnet ist. Aufgrund der dann defekten Detektionseinrichtung findet allerdings kein Eingriff der Bremseinrichtung mehr statt, so dass die Bewegungsenergie des betroffenen Fahrzeugs nur noch durch die auf der Kollision mit dem vorausfahrenden Fahrzeug basierenden Deformationsarbeit abgebaut wird.

DE 10 2009 002375 A1 offenbart ein Verfahren zur Aktivierung von einem Schutzsystem zur Beeinflussung einer Fahrzeugbewegung nach einem erkannten Primäraufprall, wobei nach dem erkannten Primäraufprall eine Bremsfunktion mit einer vorgegebenen Bremskraft aktiviert wird, und wobei die Funktionalität einer Umfeldinformationserfassung nach dem Primäraufprall überprüft wird und Daten verworfen werden, die von als defekt erkannten Sensoren zur Verfügung gestellt werden.

DE 10 2004 055 399 A1 offenbart ein Verfahren und eine Vorrichtung zur Steuerung eines Fahrzeugs, wobei nach einer Kollision das Fahrzeug automatisch gebremst wird. Wird nach der Kollision festgestellt, dass der Fahrer das Gaspedal durchgedrückt oder in einem erforderlichen Mindestmaß hat, so dass keine autonome Bremsung (mehr) notwendig ist, dann wird die automatische Bremsung vollständig unterlassen oder abgebrochen. Nach erkanntem Stillstand wird die Feststellbremse aktiviert und der Motor abgestellt.

Ein gattungsgemäßes Fahrerassistenzsystem bzw. ein gattungsgemäßes Verfahren ist aus EP 2 077 212 A1 bekannt.

Der Erfindung liegt demgegenüber die Aufgabe zugrunde, ein Fahrassistenzsystem derart fortzubilden, dass die Unfallfolgen bei einer Kollision mit einem Hindernis gemildert werden.

Diese Aufgabe wird erfindungsgemäß durch die Merkmale von Anspruch 1 gelöst.

### Offenbarung der Erfindung

Bei autonom eingreifenden ACC-Systemen des Stands der Technik wird im Falle einer Kollision mit einem Hindernis, beispielsweise mit einem vorausfahrenden Fahrzeug in der Regel die Detektionseinrichtung in Form eines Abstandssensors zerstört. Deshalb werden die Abstandsregelung und damit eine bereits vom Steuergerät des ACC-Systems eingeleitete autonome Bremsung abgebrochen.

Gemäß der Erfindung wird ein Fahrerassistenzsystem vorgeschlagen, mit einer Detektionseinrichtung, die eingerichtet ist zum Erfassen von den Fahrzustand des Fahrzeugs charakterisierenden Fahrdaten sowie einer Steuerung, welche ausgebildet ist, um die von der Detektionseinrichtung erfassten Fahrdaten zu verarbeiten und bei einem Vorliegen von vorbestimmten Fahrdaten eine Bremseinrichtung zu veranlassen, eine autonome Bremsung des Fahrzeugs durchzuführen. Im Unterschied zum Stand der Technik ist aber die Steuerung weiterhin ausgebildet ist, dass bei einem Erfassen von Fahrdaten, welche auf einen unmittelbar bevorstehenden Zusammenstoß mit einem Hindernis hinweisen, die Funktion der Detektionseinrichtung überwacht und falls die Detektionseinrichtung keine oder keine plausiblen Fahrdaten mehr an die Steuerung liefert, eine Fortsetzung der autonomen Bremsung veranlasst, wenigstens solange, bis das Fahrzeug auf eine vorgegebene Geschwindigkeit verzögert worden ist.

Unter einem "Hindernis" ist dabei jegliches Hindernis zu verstehen, welches geeignet ist, aufgrund einer Bewegung des Fahrzeugs mit diesem zu kollidieren. Insbesondere soll unter einem "Hindernis" ein vorausfahrendes Fahrzeug oder ein stehendes Fahrzeug verstanden werden, welches sich in der Bewegungsbahn des Fahrzeugs befindet.

Unter einer "autonomen Bremsung" soll eine Bremsung verstanden werden, welche nicht vom Fahrer, sondern vom Fahrerassistenzsystem eingeleitet wird. Weiterhin ist die vorgegebene (untere) Geschwindigkeit, auf welche das Fahrzeug durch die weiterhin zugespannt gehaltene Bremseinrichtung auch nach einer Kollision mit dem Hindernis noch verzögert wird, bevorzugt der Stillstand des Fahrzeugs, also Geschwindigkeit gleich Null. Da aber Geschwindigkeitssensoren erfahrungsgemäß nicht in der Lage sind, Geschwindigkeiten unterhalb von ca. 3 km/h bis 5 km/h exakt zu detektieren bzw. eine solche niedrige Geschwindigkeit von einem Stillstand zu unterscheiden, kann es sich bei der vorgegebenen Geschwindigkeit auch um diesen Erfahrungswert der Detektionsgrenze von 3 km/h bis 5 km/h handeln. Die vorgegebene Geschwindigkeit, bis zu welcher das Fahrzeug auch nach einer Kollision mit dem Hindernis durch die noch zugespannte Bremseinrichtung verzögert werden soll, kann jede beliebige Geschwindigkeit sein, welche kleiner ist als die unmittelbar vor der Kollision mit dem Hindernis vorliegende Geschwindigkeit des Fahrzeugs. Auch dann ist noch eine über den Zeitpunkt der Kollision hinaus wirkende und auf den Eingriff der Bremseinrichtung hinaus gehende Verzögerung vorhanden. Den Wert dieser vorgegebenen Geschwindigkeit legt der Fachmann aufgrund von Erfahrungswerten fest.

Die Plausibilität der von der Detektionseinrichtung gelieferten Fahrdaten wie z.B. dem Ist-Abstand zum Vorder-Fahrzeug kann beispielsweise durch Vergleich mit den von weiteren Sensoren gelieferten Daten wie Raddrehzahlsensoren, Beschleunigungssensoren usw. überprüft werden. Nicht zuletzt sind auch redundante Abstandssensoren denkbar, deren Messwerte mit einander verglichen werden.

Falls die Detektionseinrichtung überhaupt keine Fahrdaten bzw. keine plausiblen Fahrdaten mehr liefern kann, so schließen integrierte Algorithmen des Fahrerassistenzsystems auf eine Kollision mit dem Hindernis bzw. mit dem vorausfahrenden Fahrzeug. Dabei können insbesondere auf statistischen Erfahrungen basierende Annahmen getroffen werden. In diesem Fall wird die durch das Fahrerassistenzsystem z.B. aufgrund eines zu geringen Abstands und/oder aufgrund einer zu hohen Geschwindigkeit relativ zum Hindernis bereits vor der Kollision eingeleitete autonome Bremsung auch nach der Kollision solange fortgesetzt, bis das Fahrzeug bis zur vorgegebenen Geschwindigkeit bzw. bis zum Stillstand verzögert worden ist.

Falls die Detektionseinrichtung durch die Kollision aber keinen Schaden genommen hat und weiterhin plausible, die Realität wiedergebende Fahrdaten an die Steuerung liefert, kann das Fahrerassistenz-System aufgrund des dann beispielsweise auf ein sehr geringes Maß bzw. zu Null geschrumpften Abstands zum Vorder-Fahrzeug bzw. zum Hindernis die autonome Bremsung aufgrund der Regel-Algorithmen ununterbrochen von selbst aufrecht erhalten, ohne dass ein weiterer Eingriffe erfolgen muss. Denn in diesem Fall wird das Ziel einer wenigstens bis Erreichen der vorgegebenen Geschwindigkeit bzw. bis Erreichen des Stillstands ununterbrochen durchgeführten autonomen bzw. automatischen Bremsung ebenfalls erreicht.

Der Vorteil dieser Maßnahmen liegt darin, dass bei einer Schädigung der Detektionseinrichtung durch eine Kollision, welche zur Folge hat, dass die Detektionseinrichtung dann keine plausiblen oder überhaupt keine Fahrdaten mehr an die Steuerung liefern kann, eine vom Fahrerassistenzsystem bereits zuvor eingeleitete autonome Bremsung solange ununterbrochen fortgesetzt wird, bis das Fahrzeug die vorgegebene Geschwindigkeit bzw. den Stillstand erreicht hat. Somit kann die Bremseinrichtung auch nach einer bereits erfolgten Kollision mit einem Hindernis, z.B. mit einem vorausfahrenden oder stehenden Fahrzeug noch zum Abbau von Bewegungsenergie beitragen, welche ansonsten nur durch elastische und plastische Verformung der Knautschzonen der Kollisionspartner abgebaut werden würde. Die Bremseinrichtung kann daher auch nach einem Auffahren auf ein vorausfahrendes Fahrzeug zur Verzögerung des auffahrenden Fahrzeugs beitragen. Gerade bei einem Auffahrunfall am Ende eines Verkehrsstaus ist dies wichtig, weil die Bewegungsenergie des am Ende auffahrenden Fahrzeugs möglichst schnell abgebaut werden sollte, um zu vermeiden, dass durch den Aufprall Fahrzeuge auf- oder ineinander geschoben werden. Ingesamt trägt die Erfindung daher dazu bei, dass die Unfallfolgen bei solchen Kollisionen gemildert werden.

Die Steuerung ist weiterhin ausgebildet, dass sie nach dem autonomen Verzögern des Fahrzeugs in den Stillstand eine weitere Bremseinrichtung zuspannt, um das Fahrzeug in dem eingebremsten Zustand zu halten. Der Vorteil des Eingebremsthaltens des sich bereits im Stillstand befindlichen Fahrzeugs nach der Kollision mit beispielsweise einem Vorder-Fahrzeug liegt darin, dass das eingebremst gehaltene Fahrzeug dann einen größeren Widerstand gegenüber in der Folge auffahrenden Fahrzeugen und damit gegenüber der Tendenz liefert, dass das Fahrzeug durch den Aufprall auf das Vorder-Fahrzeug geschoben wird.

Bei der Bremseinrichtung, durch welche das Fahrzeug autonom in den Stillstand eingebremst wird, handelt es sich um eine Betriebsbremseinrichtung des Fahrzeugs. Die weitere Bremseinrichtung, welche das Fahrzeug dann im Stillstand hält, ist eine Feststellbremseinrichtung des Fahrzeugs. In diesem Fall wird daher die Halte-Bremskraft von der Betriebsbremseinrichtung auf die Feststellbremseinrichtung verlagert. Die Feststellbremseinrichtung wird durch elektrische Signale gesteuert bzw. betätigt, welche dann beispielsweise von der Steuerung des Fahrerassistenzsystems ausgesteuert werden.

Die Steuerung ist weiterhin ausgebildet, dass sie die Feststellbremseinrichtung vom zugespannten Zustand in den Lösezustand überführt, wenn ein (bifunktionales) Betätigungsorgan nämlich ein Gaspedal des Fahrzeugs betätigt worden ist. Dies kann beispielsweise dann vorteilhaft sein, wenn es nach einer Kollision notwendig erscheint, das Fahrzeug aus einer Gefahrenzone zu bewegen, falls das Antriebssystem noch funktionsfähig ist, um beispielsweise durch Bewegen des Fahrzeugs auf einen Standstreifen ein Auffahren von Fahrzeugen auf das stehende Fahrzeug zu vermeiden.

Durch die in den Unteransprüchen aufgeführten Maßnahmen sind vorteilhafte Weiterbildungen und Verbesserungen der in Anspruch 1 angegebenen Erfindung möglich.

Neben dem beschriebenen Eingriff in die Bremseinrichtung weisen übliche Fahrerassistenzsysteme wie ACC zusätzlich auch die Möglichkeit auf, in die Steuerung der Antriebsmaschine einzugreifen. Gemäß einer bevorzugten Weiterbildung kann daher die Steuerung des Fahrerassistenzsystems ausgebildet sein, dass zusätzlich zu dem Eingriff in die Bremseinrichtung des Fahrzeugs bei einem Vorliegen von vorbestimmten Fahrdaten eine Steuerung einer Antriebsmaschine veranlasst wird, die Antriebsleistung autonom zu reduzieren. Bei einem Erfassen von Fahrdaten, welche auf einen unmittelbar bevorstehenden Zusammenstoß mit einem Hindernis hinweisen, wird dann wie beschrieben die Funktion der Detektionseinrichtung überwacht und falls die Detektionseinrichtung keine oder keine plausiblen Fahrdaten mehr an die Steuerung liefert, zusätzlich zur Fortsetzung der autonomen Bremsung auch eine Fortsetzung der autonomen Reduzierung der Antriebsleistung der Antriebsmaschine veranlasst, wenigstens solange, bis das Fahrzeug auf die vorgegebene Geschwindigkeit verzögert worden ist. In diesem Fall trägt auch die Antriebsmaschine mit ihrem Schleppmoment zur Verzögerung des Fahrzeugs nach erfolgter Kollision bei.

Vorzugsweise wird die Leistung der Antriebsmaschine zwar reduziert, beispielsweise bis auf eine Leerlaufdrehzahl-Antriebsleistung, die Antriebsmaschine aber nicht vollständig abgeschaltet, damit die Bremseinrichtung des Fahrzeug wie oben beschrieben durch eine Betätigung des Gaspedals gelöst und das Fahrzeug aus eigener Kraft wieder in Bewegung gesetzt werden kann, sofern oder soweit dies nach der Kollision noch möglich ist.

Die genaue Funktionsweise des erfindungsgemäßen Fahrerassistenzsystems wird durch die folgende Beschreibung eines Ausführungsbeispiels deutlich.

### Zeichnung

In der Zeichnung zeigt die einzige Figur einen schematischen Aufbau einer bevorzugten Ausführungsform eines mit einer Bremseinrichtung zusammen wirkenden Fahrerassistenzsystems eines Nutzfahrzeugs.

### Beschreibung des Ausführungsbeispiels

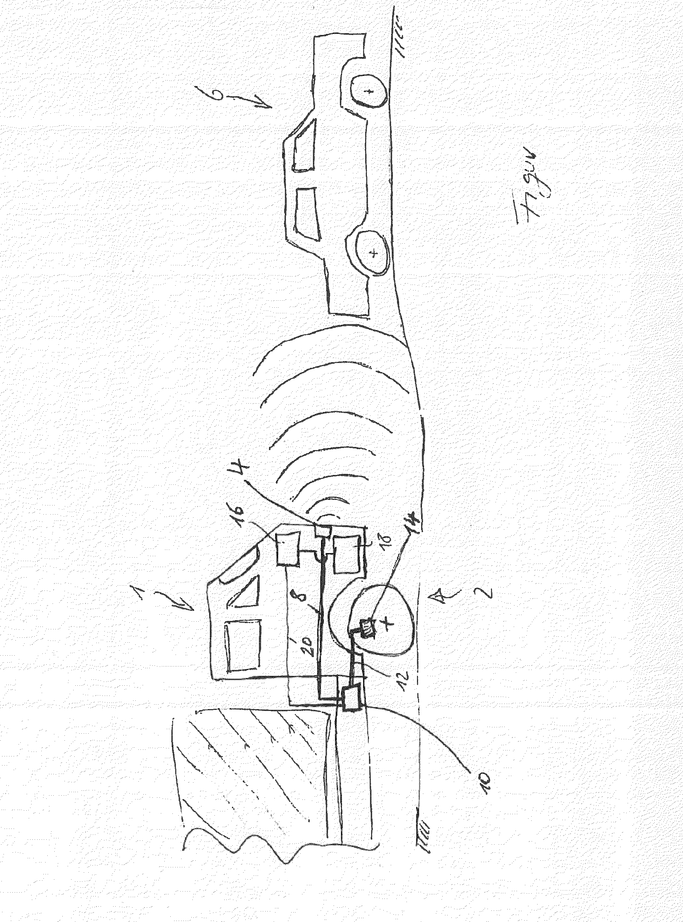

Das in Fig.1 schematisch gezeigte, bevorzugt in einem Nutzfahrzeug 1 eingesetzte Fahrerassistenzsystem 2 ist beispielsweise ein ACC-System

(Adaptive Cruise Control), welches mit Hilfe einer Detektionseinrichtung 4 wie einem Abstandssensor Fahrdaten wie den Abstand zu einem vorausfahrenden Fahrzeug 6 oder zu einem im Sensorerfassungsbereich stehenden Fahrzeug 6 ständig misst und über eine Datenleitung 8 an ein Steuergerät, hier beispielsweise an ein Bremssteuergerät 10 einer Bremseinrichtung des Fahrzeugs meldet. Das ACC-System 2 regelt dann den Ist-Abstand zum vorausfahrenden Fahrzeug 6 auf einen beispielsweise geschwindigkeitsabhängigen Soll-Abstand durch Eingriff in eine Motorsteuerung und/oder in die Bremseinrichtung ein. Eine solches vom Fahrerassistenzsystem 2 eingeleitetes Zuspannen der Bremseinrichtung stellt dann eine autonome Bremsung dar.

Bei der Bremseinrichtung handelt es sich bevorzugt um eine bekannte elektro-pneumatische Betriebsbremseinrichtung, bei welcher durch elektrische Signale des Bremssteuergeräts 10 über eine Datenleitung, bevorzugt über einen Bremsen-CAN 12 ein Bremsaktuator 14 bevorzugt elektrisch gesteuert wird. Die Betriebsbremseinrichtung kann aber auch elektro-hydraulisch, elektrisch oder auch pneumatisch betätigt sein.

Im vorliegenden Fall sind die Routinen des ACC-Systems 2 bevorzugt im Bremssteuergerät 10 der Betriebsbremseinrichtung des Nutzfahrzeugs 1 integriert. Alternativ könnte natürlich auch ein separates Steuergerät für das ACC-System 2 vorgesehen sein, welches dann mit dem Bremsteuergerät 10 der Betriebsbremseinrichtung kommuniziert. Als Abstandssensoren 4 können zum Beispiel Radar- oder Video- oder Ultraschallsensoren oder eine Kombination aus diesen (Sensorcluster) herangezogen werden. Weiterhin kann die Detektionseinrichtung 4 auch Beschleunigungssensoren und/oder Raddrehzahlsensoren und/oder Gierratensensoren und/oder Lenkwinkelsensoren umfassen, um weitere, den Bewegungs- oder Fahrzustand des Nutzfahrzeugs 1 repräsentierende Fahrdaten zu erfassen. In dem Bremssteuergerät 10 oder in einem separaten Steuergerät des Fahrerassistenzsystems 2 sind Algorithmen implementiert, mit welchen abgeschätzt werden kann, ob anhand der von der Detektionseinrichtung 4 gelieferten Fahrdaten eine Kollision mit dem vorausfahrenden Fahrzeug 6 wahrscheinlich ist. Die von der Detektionseinrichtung 4 erfassten Fahrdaten werden daher im Bremsteuergerät 10 verarbeitet, wobei bei einem Erfassen von Fahrdaten, wie beispielsweise der momentanen Geschwindigkeit und/oder der Verzögerung des Nutzfahrzeugs 1 und dessen Abstand zum vorausfahrenden Fahrzeug 6, welche auf einen unmittelbar bevorstehenden Zusammenstoß des Nutzfahrzeugs 1 mit dem vorausfahrenden Fahrzeug 6 hinweisen oder hindeuten, die weitere bestimmungsgemäße Funktionsfähigkeit der Detektionseinrichtung 4 durch in dem Bremssteuergerät 10 implementierte Algorithmen dahingehend überwacht wird, ob die von der Detektionseinrichtung 4 gelieferten Fahrdaten plausibel sind bzw. ob von ihr überhaupt noch Fahrdaten geliefert werden können.

Die Plausibilität der von der Detektionseinrichtung 4 gelieferten Fahrdaten wie z.B. des aktuellen Ist-Abstands des Nutzfahrzeugs 1 zum vorausfahrenden Fahrzeug 6 kann beispielsweise durch Vergleich mit den von verschiedenen Sensoren der Detektionseinrichtung 4 gelieferten Daten wie Raddrehzahlsensoren, Beschleunigungssensoren usw. überprüft werden.

Falls die Detektionseinrichtung 4 überhaupt keine Fahrdaten bzw. keine plausiblen Fahrdaten mehr liefern kann, so schließen die hier in das Bremssteuergerät 10 integrierten Algorithmen des Fahrerassistenzsystems 2 auf eine Kollision des Nutzfahrzeugs mit dem vorausfahrenden Fahrzeug 6 bzw. auf ein Auffahren des Nutzfahrzeugs 1 auf dieses Fahrzeug 6.

In diesem Fall wird eine bereits durch das Fahrerassistenzsystem 2 z.B. zunächst lediglich wegen eines Unterschreitens des Soll-Abstands zum vorausfahrenden Fahrzeug 6 eingeleitete autonome Bremsung zeitlich bis über die Kollision bzw. das Auffahren hinaus ununterbrochen fortgesetzt, bis das verzögerte Nutzfahrzeug 1 eine vorgegebenen Geschwindigkeit erreicht hat, welche vorzugsweise durch den Stillstand des Nutzfahrzeug 1 gegeben ist (Geschwindigkeit gleich Null).

Das Erreichen des Stillstands des Nutzfahrzeugs 1 kann beispielsweise anhand von Sensordaten von im Rahmen von Fahrdynamikregelsystemen wie ESP oder ABS ohnehin vorhandenen Raddrehzahlsensoren festgestellt werden. In der Regel stellt daher der Stillstand des Nutzfahrzeugs 1 mit einer Geschwindigkeit gleich Null die vorgegebene Geschwindigkeit dar, auf welche das Nutzfahrzeug 1 auch nach der Kollision durch die automatisch zugespannte Betriebsbremseinrichtung verzögert werden soll.

Die Plausibilität der von der Detektionseinrichtung 4 gelieferten Fahrdaten wie z.B. des Ist-Abstands zum vorausfahrenden Fahrzeug 6 kann beispielsweise durch Vergleich mit den von weiteren Sensoren gelieferten Daten wie Raddrehzahlsensoren, Beschleunigungssensoren usw. überprüft werden. Nicht zuletzt sind auch redundante Abstandssensoren denkbar, deren Messwerte mit einander verglichen werden.

Falls die Detektionseinrichtung 4 des Nutzfahrzeugs durch die Kollision bzw. durch das Auffahren hingegen keinen Schaden genommen hat und weiterhin plausible, die Realität wiedergebende Fahrdaten an das Bremssteuergerät 10 liefert, kann das Fahrerassistenz-System 2 aufgrund des dann beispielsweise auf ein sehr geringes Maß bzw. zu Null geschrumpften Abstands zum vorausfahrenden Fahrzeug 6 die autonome Bremsung aufgrund der Regel-Algorithmen ununterbrochen aufrecht erhalten.

Besonders bevorzugt sind das Bremsteuergerät 10 bzw. die in diesem implementierten Algorithmen des ACC-Systems 2 weiterhin ausgebildet, dass auch nach dem autonomen Einbremsen des Fahrzeugs in den Stillstand durch die Betriebsbremseinrichtung die Betriebsbremseinrichtung weiterhin zugespannt gehalten wird. Daher wird das Nutzfahrzeug 1 sowohl von der Betriebsbremseinrichtung bis zum Stillstand autonom eingebremst als auch von ihr danach im eingebremsten Zustand gehalten. Alternativ kann es sich bei der Bremseinrichtung, welche das Nutzfahrzeug im Stillstand hält, um eine Feststellbremseinrichtung des Nutzfahrzeugs handeln. In diesem Fall wird daher die Halte-Bremskraft von der Betriebsbremseinrichtung auf die Feststellbremseinrichtung verlagert.

Besonders bevorzugt ist das Bremsteuergerät 10 bzw. die in diesem implementierten Algorithmen des ACC-Systems 2 weiterhin ausgebildet, dass die Betriebsbremseinrichtung und/oder die Feststellbremseinrichtung vom zugespannten Zustand in den Lösezustand überführt wird, wenn ein Gaspedal des Nutzfahrzeugs 1 vom Fahrer betätigt worden ist. Dies gilt sowohl für die Phase, in welcher die vom Fahrerassistenzsystem 2 eingeleitete autonome Bremsung bzw. Verzögerung noch andauert wie auch für die Phase, in welcher das Nutzfahrzeug nach erfolgter Kollision bereits bis in den Stillstand eingebremst wurde. In beiden Phasen soll daher der Fahrer die Möglichkeit haben, durch seinen Willen die durch das ACC-System initiierte und aufrecht erhaltene autonome Bremsung abzubrechen.

Zusätzlich zu dem Eingriff in die Bremseinrichtung des Fahrzeugs kann das Fahrerassistenzsystem 2 ausgebildet sein, dass bei einem Vorliegen von vorbestimmten Fahrdaten, z.B. einem zu geringen Abstand zu einem vorausfahrenden Fahrzeug oder einer zu hohe Relativgeschwindigkeit in Bezug zu diesem ein Motorsteuergerät 16 einer Antriebsmaschine 18 des Nutzfahrzeugs 1 veranlasst wird, die Antriebsleistung autonom zu reduzieren. Insbesondere ist dann das Bremssteuergerät 10 weiterhin derart ausgebildet, dass bei einem Erfassen von Fahrdaten, welche auf einen unmittelbar bevorstehenden Zusammenstoß mit einem Hindernis hinweisen, die Funktion der Detektionseinrichtung 4 überwacht und falls die Detektionseinrichtung 4 keine oder keine plausiblen Fahrdaten mehr an das Bremssteuergerät 10 liefert, zusätzlich zur Fortsetzung der autonomen Bremsung auch eine Fortsetzung der autonomen Reduzierung der Antriebsleistung der Antriebsmaschine 18 veranlasst wird, wenigstens solange, bis das Nutzfahrzeug 1 auf die vorgegebene Geschwindigkeit bzw. in den Stillstand verzögert worden ist. Hierzu kommuniziert das Bremssteuergerät 10, in welchem vorzugsweise die entsprechenden Steuerroutinen für diese Funktionalität implementiert sind, beispielsweise mit dem Motorsteuergerät 16 der Antriebsmaschine 18 über einen Datenbus 20.

### Bezugszeichenliste

- 1: Nutzfahrzeug
- 2: Fahrerassistenzsystem
- 4: Detektionseinrichtung
- 6: Fahrzeug
- 8: Datenleitung
- 10: Bremssteuergerät
- 12: Bremsen-CAN
- 14: Bremsaktuator
- 16: Motorsteuergerät
- 18: Antriebsmaschine
- 20: Datenbus

## Patentansprüche

1. Fahrerassistenzsystem (2) für ein Fahrzeug (1) mit:
a) Einer Detektionseinrichtung (4), die eingerichtet ist zum Erfassen von den Fahrzustand des Fahrzeugs (1) charakterisierenden Fahrdaten,
b) einer Steuerung (10), welche ausgebildet ist, um die von der Detektionseinrichtung (4) erfassten Fahrdaten zu verarbeiten und bei einem Vorliegen von vorbestimmten Fahrdaten eine Bremseinrichtung zu veranlassen, eine autonome Bremsung des Fahrzeugs (1) durchzuführen, wobei
c) die Steuerung (10) weiterhin ausgebildet ist, dass bei einem Erfassen von Fahrdaten, welche auf einen unmittelbar bevorstehenden Zusammenstoß mit einem Hindernis (6) hinweisen, die Funktion der Detektionseinrichtung (4) überwacht und falls die Detektionseinrichtung (4) keine oder keine plausiblen Fahrdaten mehr an die Steuerung (10) liefert, eine Fortsetzung der autonomen Bremsung veranlasst, solange, bis das Fahrzeug (1) auf eine vorgegebene Geschwindigkeit verzögert worden ist, wobei
d) die vorgegebene Geschwindigkeit gleich Null ist, bei welcher sich das Fahrzeug (1) im Stillstand befindet, **dadurch gekennzeichnet, dass**
e) die Steuerung (10) weiterhin ausgebildet ist, dass sie nach dem autonomen Einbremsen des Fahrzeugs (1) in den Stillstand eine weitere Bremseinrichtung zuspannt, um das Fahrzeug (1) in dem eingebremsten Zustand zu halten, wobei die Bremseinrichtung eine Betriebsbremseinrichtung und die weitere Bremseinrichtung eine Feststellbremseinrichtung des Fahrzeugs (1) ist und die Haltebremskraft von der Betriebsbremseinrichtung auf die Feststellbremseinrichtung verlagert wird, und dass
f) die Feststellbremseinrichtung elektrisch betätigt ist, und dass
g) die Steuerung (10) weiterhin ausgebildet ist, dass sie die Feststellbremseinrichtung vom zugespannten Zustand in den Lösezustand überführt, wenn ein Betätigungsorgan betätigt worden ist, wobei
h) das Betätigungsorgan ein bifunktionales Betätigungsorgan nämlich ein Gaspedal ist, wobei
i) die Steuerung (10) weiterhin ausgebildet ist, dass sie in der Phase, in welcher die vom Fahrerassistenzsystem eingeleitete autonome Bremsung des Fahrzeugs noch andauert, die Bremseinrichtung vom zugespannten Zustand in den Lösezustand überführt, wenn das Gaspedal betätigt worden ist.

2. Fahrerassistenzsystem nach Anspruch 1, **dadurch gekennzeichnet, dass** die Detektionseinrichtung (4) zum Detektieren des Abstands zu einem vorausfahrenden Fahrzeug (6) ausgebildet ist.

3. Fahrerassistenzsystem nach Anspruch 2, **dadurch gekennzeichnet, dass** die Detektionseinrichtung (4) wenigstens einen Abstandssensor und/oder einen Verzögerungssensor beinhaltet.

4. Fahrerassistenzsystem nach einem der vorhergehenden Ansprüche, **dadurch gekennzeichnet, dass** die Steuerung (10) ausgebildet ist, dass zusätzlich zu dem Eingriff in die Bremseinrichtung des Fahrzeugs bei einem Vorliegen von vorbestimmten Fahrdaten eine Antriebsmaschine veranlasst wird, die Antriebsleistung autonom zu reduzieren und bei einem Erfassen von Fahrdaten, welche auf einen unmittelbar bevorstehenden Zusammenstoß mit dem Hindernis (6) hinweisen, die Funktion der Detektionseinrichtung (4) überwacht und falls die Detektionseinrichtung (4) keine oder keine plausiblen Fahrdaten mehr an die Steuerung (10) liefert, zusätzlich zur Fortsetzung der autonomen Bremsung auch eine Fortsetzung der autonomen Reduzierung der Antriebsleistung der Antriebsmaschine veranlasst wird, wenigstens solange, bis das Fahrzeug (1) auf die vorgegebene Geschwindigkeit verzögert worden ist.

## Claims

1. Driver assistance system (2) for a vehicle (1), comprising:
a) a detection device (4), which is configured to detect driving data which characterize the driving state of the vehicle (1),
b) a controller (10), which is designed to process the driving data detected by the detection device (4) and, if predetermined driving data are present, to cause a brake device to carry out autonomous braking of the vehicle (1), wherein
c) the controller (10) is also designed such that, when driving data which indicate an immediately imminent collision with an obstacle (6) are detected, it monitors the function of the detection device (4), and if the detection device (4) no longer supplies any driving data or any plausible driving data to the controller (10), it brings about continuation of the autonomous braking until the vehicle (1) has been decelerated to a predefined speed, wherein
d) the predefined speed is equal to zero, at which speed the vehicle (1) is in the stationary state, **characterized in that**
e) the controller (10) is also designed such that, after the autonomous braking of the vehicle (1) to the stationary state, it applies a further brake device in order to keep the vehicle (1) in the braked state, wherein the brake device is a service brake device and the further brake device is a parking brake device of the vehicle (1) and the securing braking force is transmitted from the service brake device to the parking brake device, and **in that**
f) the parking brake device is activated electrically, and **in that**
g) the controller (10) is also designed such that it changes the parking brake device from the applied state to the released state if an activation element has been activated, wherein
h) the activation element is a bifunctional activation element, namely an accelerator pedal, wherein
i) the controller (10) is also designed such that, in the phase in which the autonomous braking of the vehicle initiated by the driver assistance system still persists, it changes the brake device from the applied state to the released state if the accelerator pedal has been activated.

2. Driver assistance system according to Claim 1, **characterized in that** the detection device (4) is designed to detect the distance from a vehicle (6) driving in front.

3. Driver assistance system according to Claim 2, **characterized in that** the detection device (4) contains at least one distance sensor and/or a deceleration sensor.

4. Driver assistance system according to one of the preceding claims, **characterized in that** the controller (10) is designed such that, in addition to the intervention in the brake device of the vehicle, if predetermined driving data are present, a drive machine is made to reduce the driving power autonomously and, if driving data which indicate an immediately imminent collision with the obstacle (6) are detected, the function of the detection device (4) is monitored and, if the detection device (4) no longer supplies any driving data or any plausible driving data to the controller (10), in addition to the continuation of the autonomous braking a continuation of the autonomous reduction of the driving power of the drive machine is also brought about, at least until the vehicle (1) has been decelerated to the predefined speed.

## Revendications

1. Système (2) d'assistance à la conduite pour un véhicule (1) comprenant :
a) un dispositif (4) de détection conçu pour détecter des données de marche caractérisant l'état de marche du véhicule (1),
b) une commande (10), qui est constituée pour traiter les données de marche détectées par le dispositif (4) de détection et pour faire que, en présence de données de marche définies à l'avance, un dispositif de freinage effectue un freinage autonome du véhicule (1), dans lequel
c) la commande (10) est constituée, en outre, pour contrôler, s'il est détecté des données de marche, qui indiquent l'imminence immédiate d'une collision avec un obstacle (6), le fonctionnement du dispositif (4) de détection et, si le dispositif (4) de détection ne fournit plus de données de marche ou ne fournit plus de données de marche plausibles au dispositif (10) de commande, provoquer une continuation du freinage autonome, au moins jusqu'à ce que le véhicule (1) ait été ralenti à une vitesse donnée à l'avance, dans lequel
d) la vitesse donnée à l'avance est égale à zéro, vitesse à laquelle le véhicule (1) se trouve à l'arrêt, **caractérisé en ce que**
e) la commande (10) est constituée, en outre, de manière à serrer, après le freinage autonome du véhicule (1) dans l'état d'arrêt, un autre dispositif de freinage pour maintenir le véhicule (1) à l'état freiné, le dispositif de freinage étant un dispositif de frein de service et l'autre dispositif de freinage un dispositif de frein de stationnement du véhicule (1) et la force de freinage d'arrêt est passée du dispositif de frein de service au dispositif de frein de stationnement et **en ce que**
f) le dispositif de frein de stationnement est actionné électriquement et **en ce que**
g) la commande (10) est constituée, en outre, de manière à faire passer le dispositif de frein de stationnement de l'état serré à l'état desserré, lorsqu'un organe d'actionnement a été actionné, dans lequel
h) l'organe d'actionnement est un organe d'actionnement bifonctionnel, à savoir une pédale d'accélérateur, dans lequel
i) la commande (10) est en outre constituée pour, dans la phase où le freinage autonome du véhicule, lancé par le système d'assistance à la conduite, dure encore, faire passer le dispositif de freinage de l'état serré à l'état desserré, si la pédale d'accélérateur a été actionnée.

2. Système d'assistance à la conduite suivant la revendication 1, **caractérisé en ce que** le dispositif (4) de détection est constitué pour la détection de la distance à un véhicule (6) précédent.

3. Système d'assistance à la conduite suivant la revendication 2, **caractérisé en ce que** le dispositif (4) de détection comporte au moins un capteur de distance et/ou un capteur de décélération.

4. Système d'assistance à la conduite suivant l'une des revendications précédentes, **caractérisé en ce que** la commande (10) est constituée pour faire, supplémentaire à l'intervention dans le dispositif de frein du véhicule en présence de données de marche définies à l'avance, qu'un moteur de traction réduise de manière autonome la puissance de traction et, s'il est détecté des données de marche, qui indiquent l'imminence immédiate d'une collision avec l'obstacle (6), contrôle le fonctionnement du dispositif (4) de détection et, si le dispositif (4) de détection ne fournit plus de données de marche ou ne fournit plus de données de marche plausibles à la commande (10), provoque, supplémentairement à la continuation du freinage autonome, également une continuation de la réduction autonome de la puissance de traction du moteur de traction, au moins jusqu'à ce que le véhicule (1) ait été décéléré jusqu'à la vitesse donnée à l'avance.
